# EUROPEAN PATENT APPLICATION

(11) **EP 1 348 587 A2**
(43) Date of publication of application: **01.10.2003**
(21) Application number: 03251758.3
(22) Date of filing: 20.03.2003
(51) Int. Cl.: B60K 17/04, B60G 3/00

(54) **A suspension system for a low floor vehicle**

(30) Priority: 27.03.2002 US 107222
(71) Applicant: ArvinMeritor Technology, LLC, Troy, MI 48084 (US)
(72) Inventor: Smith, Mark, Troy, Michigan 48084 (US); Bennett, John, Fraser, Michigan 48026 (US); Kuan, Chihping, Rochester Hills, Michigan 48306 (US); Ma, John, Rochester, Michigan 48306 (US); Eshelman, Edward Jay, Rochester Hills, Michigan 48309 (US); Sullivan, William, Newark, Ohio 43055 (US); House, Dean Mark, Pataskala, Ohio 43062 (US); Varela, Tomaz Dopico, Gahanna, Ohio 43230 (US)
(74) Representative: Jones, John Bryn

(57) **Abstract**

A suspension system for a low floor vehicle (10) includes an independent suspension system which includes a spring strut (66) of the McPherson type. The spring strut essentially combines a spring and shock into a load bearing member of the suspension (24). The spring strut is mounted to the hub support structure and the top of each wheel box. An input gear box such as a differential is mounted to the vehicle underside or directly to a hub gear box (42,44).

## Description

### BACKGROUND OF THE INVENTION

The present invention relates to a suspension system, and more particularly to an independent suspension system using McPherson struts for a mass transit vehicle which provides a significantly lower floor profile.

Mass transit vehicles, such as trolley cars, buses, and the like typically have seats aligned at the lateral sides of the vehicle, with a central aisle and floor extending along the vehicle. In order to facilitate entering and exiting from the vehicle, it is desirable to have the vehicle floor and aisle positioned relatively low to the ground. This provides faster cycle time when the bus stops.

Mass transit vehicles typically have several axles which support, drive and steer the vehicle. Many such vehicles provide a rigid axle having a gear box at a longitudinal end to form an inverted portal axle configuration. Disadvantageously, this arrangement has limited ride benefits resultant from the rigid axle suspension system.

In other known embodiments, relatively more complex independent suspension systems have been available with either a single reduction carrier on relatively lighter vehicles or a double reduction system on relatively heavier vehicles. The multiple of support, dampening and structural components of the independents suspensions require a significant amount of packaging space. The floor profile must therefore be raised for a significant length of the vehicle. Raising the floor profile in such a manner requires the passengers to climb up to a platform above the axle, which renders that portion of the bus either inaccessible or uncomfortable.

Accordingly, it is desirable to provide a suspension system which provides ride benefits associated with independent suspension systems while still maintaining a low floor profile to improve vehicle access.

### SUMMARY OF THE INVENTION

The suspension system according to the present invention provides an independent suspension system which includes a spring strut of the McPherson type. The spring strut essentially combines a spring and shock into a load bearing member of the suspension which decreases the required packaging space by minimizing suspension components.

A set of vehicle wheels are each mounted to an independent suspension system adjacent a vehicle underside. A first and second hub assembly support their respective set of wheels. The hub assemblies each define a rotational axis about which the vehicle wheels are rotated. Each hub assembly is supported by an independent suspension system which provides for the independent articulation of each hub assembly.

An input gear box such as a differential is mounted to the vehicle underside. The input gear box is interconnected to the hub gear boxes through drive shafts which extend from the input gear box to the hub gear boxes. The input gear box simultaneously drives both hub assemblies to provide a rotation input thereto through the drive shafts.

In another embodiment of the present invention, an input gear box such as a differential is mounted directly to the first hub gear box to provide a torque input thereto. The input gear box is mounted along a second axis and directly engages the first gear box reduction gear set. The input gear box is connected to the second hub gear box through a drive shaft which extends under the vehicle underside. The drive shaft includes one or more sections to provide for misalignment and articulation.

The present invention therefore provides ride benefits associated with independent suspension systems while maintaining a low floor profile to improve access to the vehicle.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1A is a rear view of a suspension system of the subject invention;
Figure 1B a top view of the suspension system of Figure 1;

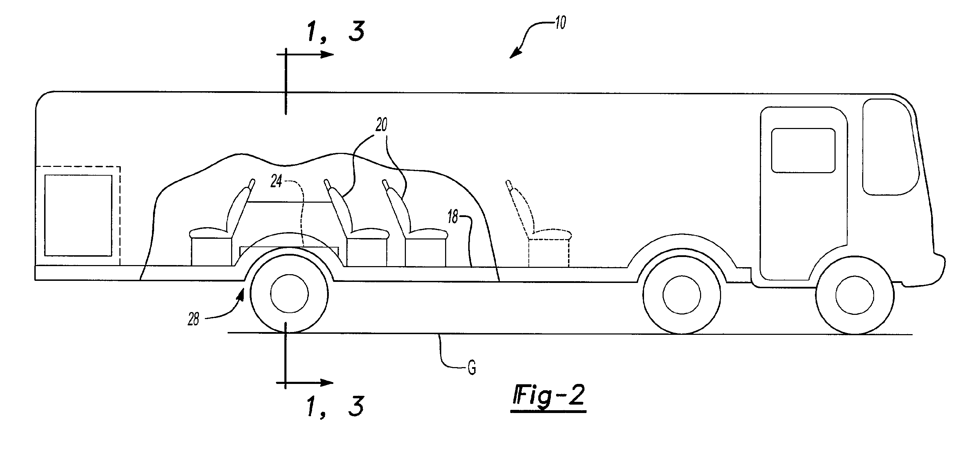

Figure 2 is a schematic side view of a low floor vehicle for use with the suspension system of the subject invention; and
Figure 3 is a rear view of another suspension system of the subject invention; and

### DETAILED DESCRIPTION OF THE PREFERRED EMBODIMENT

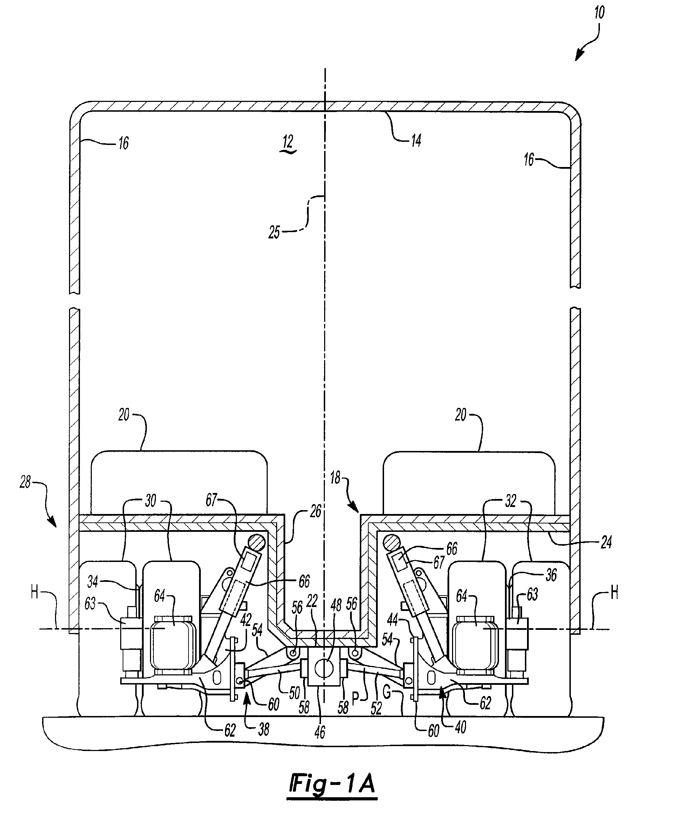

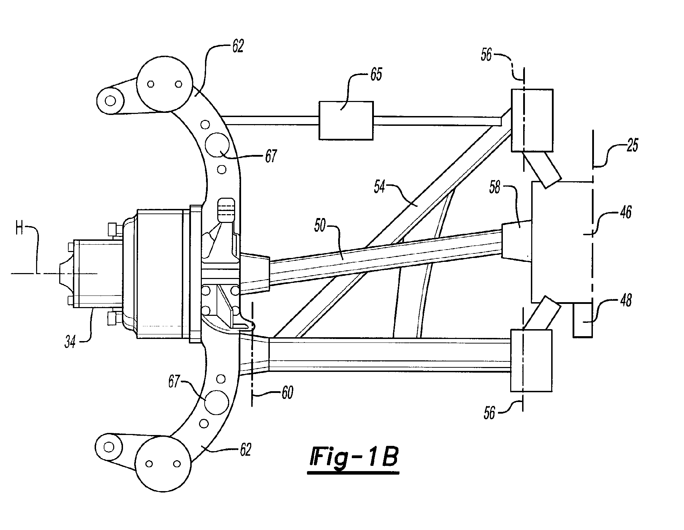

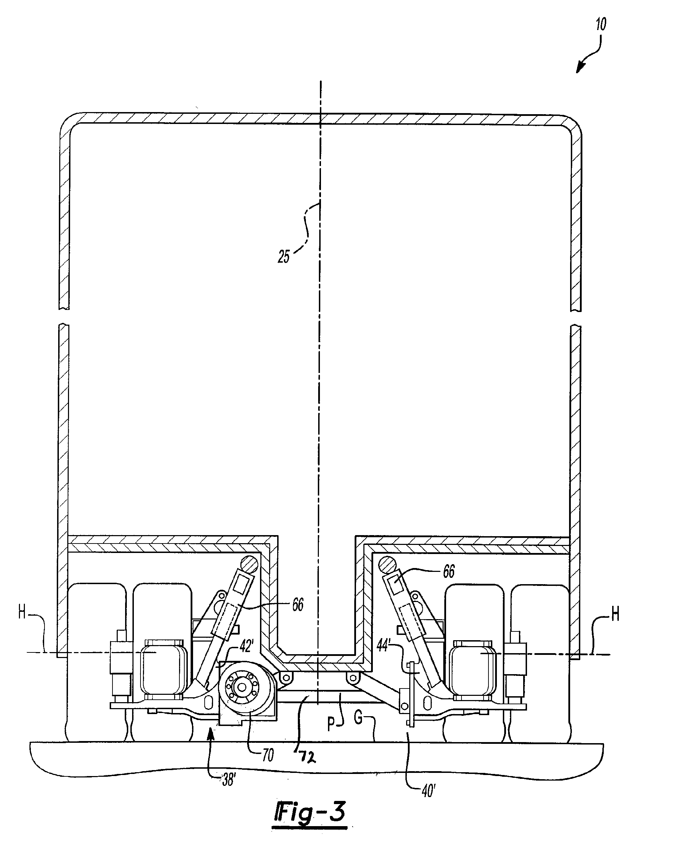

Figure 1 schematically illustrates a cross-sectional view of a vehicle 10 which includes a passenger compartment 12 defined by a roof 14, side walls 16, and a vehicle floor 18. The cross-sectional view is taken transverse to the vehicle length. That is, substantially along the vehicle width (Figure 3). The vehicle 10 includes a multiple of passenger seats 20 mounted adjacent to each of the sidewalls 16 with a center aisle 22 extending along the length of the vehicle 10 and between the seats 20. In order to facilitate entering and exiting the vehicle 10, it is desirable to have the vehicle floor 18 and aisle 22 positioned relatively low to the ground g.

The floor 18 includes the aisle portion 22 which defines a first profile segment. A top of each wheel box 24 defines a second profile segment. A substantially perpendicular wall 26 which extends between the first and second profile segments defines the third profile segment. The profile segments define an underside 28 of the vehicle 10 adjacent an axle area which generally follows the contours of the vehicle floor 18.

A set of vehicle wheels 30,32 are each mounted to a hub assembly 34,36 which supports the respective set of wheels 30,32. The hub assemblies 34,36 each define a rotational axis H about which the vehicle wheels 30,32 are rotated. Each hub assemblies 34,36 is supported by the independent suspension system (illustrated somewhat schematically at 38, 40) which provide for the independent articulation of each hub assembly 34,36.

The hub assemblies 34,36 define a rotational axis H substantially transverse to the vehicle longitudinal axis 25. It should be understood that the rotational axis H is defined herein at a particular static condition. In this static condition, such as when the vehicle 10 is parked or traveling over level terrain, the rotational axis H of both hub assemblies 34,36 arc substantially aligned. It will be appreciated that because of the independent suspension systems 38, 40, the rotational axis H of each hub assemblies 34, 36 may be laterally displaced from each other.

A first hub gear box 42 is operably connected to the first hub assembly 34 for providing torque to drive the first set of wheels 30. A second hub gear box 44 which is effectively identical to the first hub gear box 42 is operably connected to the second hub assembly 36 for providing torque to drive the second set of wheels 32. The first and second hub gear box 42,44 include a reduction gear set for reducing a rotational input such as preferably a helical gear reduction box which defines an input axis. The first and second hub gear box 42,44 define a second axis P which is parallel to the hub rotational axis H. Again, axis P, like axis H is herein defined relative to a static condition. The second axis P is preferably defined by the input to the hub gear boxes 42, 44. The distance between the input to the hub gear boxes 42, 44 defined by the second axis P and the output of the hub assemblies 34, 36 defined by the rotational axis H is commonly referred to as a portal distance.

An input gear box 46 such as a differential is mounted to the vehicle underside 28 and preferably along the first profile segment or aisle 24. The input gear box 46 is preferably mounted along the vehicle longitudinal axis 25 and includes a coupling (illustrated schematically at 48) extending therefrom to receive an input from a drive source such as vehicle engine (not shown). Appropriate gear reductions depending upon the drive source is well within the knowledge of one skilled in the art. It should be further understood that additional drive train components may also benefit from the instant invention.

The input gear box 46 is interconnected to the first and second hub gear boxes 42, 44 through a first and second drive shaft 50, 52 such as a constant velocity joint which preferably includes a plunge capability. The drive shafts 50, 52 extend between the input gear box 46 and the input to the hub gear boxes 42, 44. That is, drive shafts 50, 52 engage the hub gear boxes 42, 44 along the second axis P. The input gear box 46 simultaneously drives both hub assemblies 34,36 to provide a rotation input thereto through the drive shafts 50, 52.

Each independent suspension system 38, 40 preferably includes a lower control arm 54 which is pivotally mounted to the first profile segment under aisle 22 adjacent the input gear box 46. The lower control arms 54 are preferably A-arms (Figure 1B). The lower control arms 54 are preferably mounted in a plane that includes an inner pivot 56 of the lower control arm 54 and an output 58 from the input gear box 46.

The lower control arms 54 are mounted to their respective hub assembly 34, 36 at an outer pivot 60. The outer pivot 60 is preferably defined along a hub support structure 62, such as a "banana" support which is mounted to the hub assembly 34, 36. That is, the lower control arm 54 pivotally engages the hub support structure 62 to which the hub assembly 34, 36 is rigidly attached. The hub support structure 62 may alternatively or in addition provide support for a shock 63, and/or a damper 64 such as an air spring or the like. It should be understood that all suppose structure is not particularly illustrated in the illustrative embodiment, however, such structure is well known. The lower control arms 54 are preferably mounted in a plane that includes the outer pivot 60 and the second axis P. Plunging of the drive shafts 50, 52 is thereby minimized.

The pivots 56, 60 may alternatively or additionally include multidirectional pivot such as a ball joint, elastomeric coupler or the like. A toe link 65 (Figure 1B) may also be attached adjacent the pivots 56, 60 to provide toe-in and toe-out adjustments. It should be realized that although a particular suspension link arm configuration is illustrated in the disclosed embodiment, other independent suspension systems will benefit from the instant invention.

Each independent suspension system 38, 40 preferably includes a spring strut 66 of the McPherson type attached at mounting points 67 (Figure 1B). Preferably a spring strut 66 s mounted before and after relative to the hub assemblies 34,36 (Figure 1B). The spring strut 66 essentially combines a spring and shock into a load bearing member of the suspension which reduces the complexity of the suspensions. The spring strut 66 is preferably mounted to the hub support structure 62 and the top of each wheel box 24 which defines the second profile segment. This arrangement provides for a further reduction in floor height than existing inverted portal axles by eliminating the axle housing from below the first profile segment. It should be understood that alternative spring strut 66 mounting locations will also benefit from the present invention.

The spring struts 66 preferably include a relatively significant overlap to reduce bearing loads and internal friction. The spring struts 66 may alternatively or additionally include damper and spring functions to replace the separate components and thereby simplify the suspension systems. A compressible fluid actuator may also be incorporated in the spring struts 5 (illustrated schematically at 67) to provide a semi active suspension.

Referring to Figure 3, an integrated input gear box 70 such as a differential is mounted directly to the first hub gear box 42' to provide a torque input thereto. The input gear box 70 is mounted along the second axis P and directly engages the first gear box 42' reduction gear set. That is, the input gear box 70 is thus part of the unsprung mass as compared to the sprung mass of Figure 1.

The input gear box 70 is connected to the second hub gear box 44' through a drive shaft 72 which extends under the first profile segment. A constant velocity joint (illustrated schematically at 74 is preferably located at each end of the drive shaft 72 for connections to the hub gear boxes 42', 44'. The drive shaft 72 includes one or more sections to provide for misalignment and may include alternatively include sprung segments.

As indicated above, the lower control arms, the spring struts 66, and other suspension components support each independent suspension system 38', 40' as described above. It should be further understood that various combinations of suspension components will also benefit from the present invention.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A suspension system for a low floor vehicle (10) comprising:
a first and a second hub assembly (34, 36), said first and second hub assembly having a rotational axis defining along a first axis (H), said first axis substantially transverse to a vehicle longitudinal axis;
a first hub gear box (42) operably connected to said first hub assembly (34) for providing torque to drive said first hub assembly, said first hub gear box having a first rotational input axis defining along a second axis (P) offset from said first axis (H);
a second hub gear box (44) operably connected to said second hub assembly (36) for providing torque to drive said second hub assembly, said second hub gear box having a second rotational input axis defining along said second axis (P) offset from said first axis (H);
an independent suspension system independently supporting each of said first and second hub assemblies (34, 36); and
a spring strut (66) supporting each of said first and second hub assemblies.

2. A suspension system for a low floor vehicle as recited in Claim 1 further comprising a differential (46) remotely located from said first and a second hub assembly (34, 36), a first and a second constant velocity drive shaft (50, 52) interconnecting said differential (46) and said first and second hub gear box (42, 44).

3. A suspension system for a low floor vehicle as recited in Claim 2 wherein said first and second constant velocity drive shaft (50, 52) are angled relative to said second axis (P).

4. A suspension system for a low floor vehicle as recited in Claim 1 further comprising a differential (70) interconnected with said first hub gear box (42), and a constant velocity drive shaft (72) interconnected with said differential (70) and said second hub gear box (44).

5. A suspension system for a low floor vehicle as recited in Claim 4 wherein said constant velocity drive (72) engages said second hub gear box (44) along said second axis (P).

6. A suspension system for a low floor vehicle as recited in Claim 4 or 5 wherein said constant velocity drive shaft (72) is substantially parallel to said first axis (H).

7. A suspension system for a low floor vehicle as recited in any preceding claim wherein each of said first and second independent suspension system further comprises a support structure (62) mounted adjacent said first and a second hub assembly (34, 36), said spring strut (66) mounted to said support structure.

8. A suspension system for a low floor vehicle as recited in any preceding claim wherein each of said first and second independent suspension system further comprises a lower control arm (54), said lower control arm (54) pivotally mounted at an outer pivot point located along said second axis (P).

9. A suspension system for a low floor vehicle as recited in any preceding claim wherein each of said first and second hub gear box (42, 44) comprise a helical gear reduction system.

10. A suspension system for a low floor vehicle as recited in any preceding claim wherein said spring strut (66) comprises a McPherson type spring strut.

11. A suspension system for a low floor vehicle (10) as recited in any preceding claim further comprising a floor (18) defined beneath a set of passenger seats (20), said floor having a profile with at least three profile segments wherein a first profile segment (22) extends under the seats and along a vehicle longitudinal axis for a first length and a second profile segment (24) which extends along said longitudinal axis for a second length adjacent to said first axis and a third profile segment (26) defined above a wheel box, said spring strut (66) attached adjacent an intersection of said second and third profile segment.
